(19) Europäisches Patentamt
European Patent Office
Office européen des brevets

(11) Veröffentlichungsnummer: **0 186 837**
**B1**

(12) # EUROPÄISCHE PATENTSCHRIFT

(45) Veröffentlichungstag der Patentschrift: **12.10.88**

(51) Int. Cl.⁴: **C 08 F 4/64**, C 08 F 10/02

(21) Anmeldenummer: **85115970.7**

(22) Anmeldetag: **13.12.85**

(54) **Verfahren zum Herstellen von Ethylenpolymerisaten relativ niederer Dichte mittels eines Ziegler-Katalysatorsystems.**

(30) Priorität: **21.12.84 DE 3446777**

(43) Veröffentlichungstag der Anmeldung: **09.07.86 Patentblatt 86/28**

(45) Bekanntmachung des Hinweises auf die Patenterteilung: **12.10.88 Patentblatt 88/41**

(84) Benannte Vertragsstaaten: **AT BE DE FR GB IT**

(56) Entgegenhaltungen:
**EP-A-0 113 937**
**US-A-2 953 552**

(73) Patentinhaber: **BASF Aktiengesellschaft, Carl-Bosch- Strasse 38, D-6700 Ludwigshafen (DE)**

(72) Erfinder: **Funk, Guido, Dr., Duererstrasse 5, D-6520 Worms (DE)**
Erfinder: **Staiger, Gerhard, Dr., Virchowstrasse 26, D-6712 Bobenheim- Roxheim (DE)**
Erfinder: **Schweier, Günther, Dr., Friedrich-Pietzsch- Strasse 14, D-6701 Friedelsheim (DE)**

**EP 0 186 837 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft ein Verfahren zum Herstellen von Ethylenpolymerisaten relativ niederer Dichte durch Polymerisation von Ethylen bei Temperaturen von 20 bis 160, insbesondere 50 bis 120°C und Drücken von 1 bis 100, insbesondere 10 bis 50 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$Ti(OR^1)_4$,

worin $R^1$ steht für einen $C_1$- bis $C_{12}$-Kohlenwasserstoffrest aliphatischer und/oder aromatischer Natur, vorzugsweise für eine $C_1$- bis $C_{12}$-Alkylgruppe, und insbesondere für eine $C_1$-bis $C_9$-Alkylgruppe, sowie

(1.2) einer zweiten Titan enthaltenden Unterkomponente, die zudem Chlor enthält, und

(2) einer Aluminium enthaltenden Komponente, bestehend aus einer aluminiumorganischen Verbindung der Formel

$AlR^2_3$

worin stehen
$R^2$ für $R^3$ oder $OR^3$, insbesondere $R^3$, und
$R^3$ für eine $C_1$- bis $C_8$-, insbesondere $C_1$- bis $C_4$-Alkyl-gruppe,

mit den Maßgaben, daß das Atomverhältnis Titan aus (1): Aluminium aus (2) 1 : 1 bis 1 : 250, insbesondere 1 : 3 bis 1 : 50 und das Verhältnis Titan aus (1.1) : Titan aus (1.2) 1 : 0,01 bis 1 : 10, insbesondere 1 : 0,05 bis 1 : 0,5 beträgt.

Polymerisationsverfahren dieser Art sind bekannt, wobei im gegebenen Zusammenhang als repräsentativ das in der US-PS-2 953 552 beschriebene gelten kann.

Die genannte Verfahrensart hat - ebenso wie in Parallele zu setzende andere Verfahrensarten - zum Kernstück eine in besonderer Weise ausgestaltete binäre Titan enthaltende Katalysatorkomponente (1).

Die besonderen Ausgestaltungen dieser binären Katalysatorkomponente (1) werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit Titan der Katalysatorkomponente (1) erhöht ist.

(b) Katalysatorsysteme, durch die weniger Halogen in das Polymerisat eingebracht wird; - was zu erreichen ist, indem

($b_1$) die Ausbeute gemäß (a) gesteigert wird und/oder
($b_2$) Katalysatorkomponenten (1) eingesetzt werden, die kein Halogen enthalten.

(c) Katalysatorsysteme, die bei der Polymerisation von Ethylen unter Niederdruckbedingungen, d.h. nach Ziegler, ohne Zufuhr von Comonomeren, wie höheren α-Olefinen, in das Polymerisationssystem zu seitenkettenverzweigten Produkten mit abgesenkten Polymerdichten führen.

(d) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z. B. für die Thermodynamik der Verfahrensführung von Bedeutung sein kann.

(e) Katalysatorsysteme, die einfach und sicher herzustellen und gut handzuhaben sind; - z. B. solche, die sich in (inerten) Kohlenwasserstoff-Hilfsmedien zubereiten lassen.

(f) Katalysatorsysteme, die zu niederdichten, verzweigten Polymerisaten mit geringen in Heptan löslichen Anteilen führen; - wodurch z. B. die Klebneigung von Folien aus diesen Polymerisaten

zurückgedrängt werden kann.

(g) Katalysatorsysteme, die vergleichsweise geringe Mengen an aluminium enthaltender Komponente (2) benötigen; - wodurch sich z. B. Ablagerungen und Korrosionsschäden an Reaktorteilen vermindern lassen.

(h) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufbereitung der Polymerisate und/oder die Verarbeitbarkeit der Polymerisate von Bedeutung sein kann.

Nach den bisherigen Erfahrungen gibt es unter den mannigfachen Zielen etliche Ziele, die man durch besondere Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen lag auch die Aufgabenstellung, die zur vorliegenden Erfindung geführt hat: Eine neue Art binärer Titan enthaltender Katalysatorkomponente (1) aufzuzeigen, mit der man gegenüber bekannten binären Titan enthaltendenden Katalysatorkomponenten (1) - unter vergleichbarer Zielsetzung - bessere Ergebnisse erreichen kann, insbesondere was die vorgenannten Ziele (a), (b), (d) und (f) betrifft, die - in Kombination miteinander - möglichst gut erreicht werden sollen, bei zugleich gutem Erreichen auch des Zieles (c).

Es wurde gefunden, daß die gestellte Aufgabe gelöst werden kann, wenn man bei dem eingangs definierten Polymerisationsverfahren ein Ziegler-Katalysatorsystem einsetzt, in dessen binärer Titan enthaltender Komponente (1) die zweite Titan enthaltende Unterkomponente (1.2) aus einem feinteiligen Feststoff besteht, der in einer bestimmten mehrstufigen Verfahrensweise aus Titantetrachlorid, einer speziellen Art eines Oxakohlenwasserstoffs sowie einer spezifischen Art eines Magnesiumalkylats erhalten worden ist.

Gegenstand der vorliegenden Erfindung ist dementsprechend ein Verfahren zum Herstellen von Ethylenpolymerisaten relativ niederer Dichte durch Polymerisation von Ethylen bei Temperaturen von 20 bis 160, insbesondere 50 bis 120°C und Drücken von 1 bis 100, insbesondere 10 bis 50 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$Ti(OR^1)_4$,

worin $R^1$ steht für einen $C_1$- bis $C_{12}$-Kohlenwasserstoffrest aliphatischer und/oder aromatischer Natur, vorzugsweise für eine $C_1$- bis $C_{12}$-Alkylgruppe, und insbesondere für eine $C_1$-bis $C_9$-Alkylgruppe, sowie

(1.2) einer zweiten Titan enthaltenden Unterkomponente, die zudem Chlor enthält,

und

(2) einer Aluminium enthaltenden Komponente, bestehend aus einer aluminiumorganischen Verbindung der Formel

$AlR^2_3$

worin stehen
$R^2$ für $R^3$ oder $OR^3$, insbesondere $R^3$, und
$R^3$ für eine $C_1$- bis $C_8$-, insbesondere $C_1$- bis $C_4$-Alkyl-gruppe,

mit den Maßgaben, daß das Atomverhältnis Titan aus (1): Aluminium aus (2) 1 : 1 bis 1 : 250, insbesondere 1 : 3 bis 1 : 50 und das Verhältnis Titan aus (1.1) : Titan aus (1.2) 1 : 0,01 bis 1 : 10, insbesondere 1 : 0,05 bis 1 : 0,5 beträgt.

Das erfindungsgemäße Verfahren ist dadurch gekennzeichnet, daß eine binäre Titan enthaltende Komponente (1) eingesetzt wird, deren zweite Titan enthaltende Unterkomponente (1.2) besteht aus einem feinteiligen Feststoff, der erhalten worden ist, indem man zunächst

(1.2.1) unter heftiger Bewegung ein Gemisch aus (1.2.1.1) 100 Gewichtsteilen Titantetrachlorid und

(1.2.1.2) 4 bis 20, vorzugsweise 7 bis 18, und insbesondere 10 bis 15 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3 aber weniger als 11 Kohlenstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, mit (1.2.1.3) einem Magnesium-$C_1$- bis $C_4$-alkylat, vorzugsweise -$C_2$- bis -$C_3$-alkylat, in einer solchen Menge zusammenbringt, daß das Molverhältnis Oxakohlenwasserstoff (1.2.1.2): Magnesiumalkylat (1.2.1.3) 1 : 0,3 bis 1 : 10, vorzugsweise 1 : 0,5 bis 1 : 5 beträgt, das Ganze 0,1 bis 3, vorzugsweise 0,3 bis 1,5 Stunden auf einer Temperatur von 30 bis 150, vorzugsweise 60 bis 130° C hält, daraufhin

(1.2.2) den aus (1.2.1) resultierenden feinteiligen Feststoff von der verbleibenden Flüssigkeit abtrennt, mit der 1- bis 20-, vorzugsweise 5- bis 10-fachen Menge seines Gewichts Titantetrachlorid spült, hierauf mit einem inerten flüssigen Kohlenwasserstoff, insbesondere einem $C_5$- bis $C_{10}$-Alkan, solange wäscht, bis die Waschflüssigkeit frei von Titantetrachlorid bleibt, und trocknet, dann

(1.2.3) unter heftiger Bewegung (1.2.3.1) 100 Gewichtsteile Titantetrachlorid mit (1.2.3.2) 5 bis 35, vorzugsweise 10 bis 25, und insbesondere 15 bis 20 Gewichtsteilen des aus (1.2.2) resultierenden feinteiligen Feststoffs zusammenbringt und das Zusammengebrachte 0,1 bis 3, vorzugsweise 0,3 bis 1,5 Stunden auf einer Temperatur von 30 bis 150, vorzugsweise 60 bis 130° C hält, hierauf

(1.2.4) den aus (1.2.3) resultierenden feinteiligen Feststoff von der verbleibenden Flüssigkeit abtrennt, mit der 1- bis 20-, vorzugsweise 5- bis 10-fachen Menge seines Gewichts Titantetrachlorid spült, dann mit einem inerten flüssigen Kohlenwasserstoff, insbesondere einen $C_5$- bis $C_{10}$-Alkan, solange wäscht, bis die Waschflüssigkeit frei von Titantetrachlorid bleibt, und schließlich - unter Erhalten der gewünschten zweiten Titan enthaltenden Unterkomponente (1.2) - trocknet.

Zu dem erfindungsgemäßen Verfahren ist im einzelnen das Folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren oder Trockenphasen-Polymerisationsverfahren. Die erwähnten technologischen Ausgestaltungen - mit anderen Worten: die technologischen Varianten der Polymerisation von Ethylen in Gegenwart von Wasserstoff nach Ziegler - sind aus der Literatur und Praxis wohlbekannt, so daß sich nähere Ausführungen zu ihnen erübrigen.

Es ist indes noch festzuhalten, daß beim erfindungsgemäßen Verfahren die Komponenten des Katalysatorsystems in mannigfacher Weise in den Polymerisationsraum eingebracht werden können, z. B. (i) die erste Titan enthaltende Unterkomponente (1.1), die zweite Titan enthaltende Unterkomponente (1.2) sowie die Aluminium enthaltende Komponente (2) alle örtlich gemeinsam, (ii) die gleichen drei Komponenten alle örtlich getrennt voneinander, (iii) die erste Titan enthaltende Unterkomponente (1.1) einerseits und ein Gemisch aus der zweiten Titan enthaltenden Unterkomponente (1.2) und der Aluminium enthaltenden Komponente (2) andererseits örtlich getrennt voneinander - was insbesondere beim Trockenphasen-Polymerisationsverfahren von Vorteil sein kann - oder (iiii) ein Gemisch aus der ersten Titan enthaltende Unterkomponente (1.1) und der zweiten Titan enthaltenden Unterkomponente (1.2) einerseits und die Aluminium enthaltende Komponente (2) andererseits örtlich getrennt voneinander.

Was die stoffliche Seite des neuen Katalysatorsystems betrifft, ist im einzelnen das folgende zu sagen:

(1) Die binäre Titan enthaltende Komponente besteht aus einer ersten Titan enthaltenden Unterkomponente (1.1) sowie einer zweiten Titan enthaltenden Unterkomponente (1.2).

(1.1) Die erste Titan enthaltende Unterkomponente ist ein Titansäureester der angegebenen Formel und kann insoweit ein bei Ziegler-Katalysatorsystemn üblicher Titansäureester sein. Unter Wahrung der oben gegebenen Rangfolge eignen sich z. B. die folgenden Individuen: Titantetramethylat, Titantetraethylat, Titantetra-n-propylat, Titantetra-isopropylat, Titantetra-n-butylat, Titantetra-n-nonylat.

Die Titansäureester können eingesetzt werden als Einzelindividuen oder in Form von Gemischen aus zwei oder mehr Einzelindividuen.

(1.2) Die zweite Titan enthaltende Unterkomponente besteht aus einem feinteiligen Feststoff, der in einer bestimmten mehrstufigen Verfahrensweise aus Titantetrachlorid, einer speziellen Art eines Oxakohlenwasserstoffs sowie einer spezifischen Art eines Magnesiumalkylats erhalten worden ist.

Hierbei kann als Titantetrachlorid zweckmäßigerweise ein für Ziegler-Katalysatorsysteme übliches dienen.

Der einzusetzende Oxakohlenwasserstoff hat der oben gegebenen Definition zu entsprechen; er sollte zweckmäßigerweise möglichst rein sein und insbesondere möglichst wenig wasserstoffacide Verunreinigungen enthalten. Unter Wahrung der oben gegebenen Rangfolge eignen sich z. B. die folgenden Individuen: Dioxan, Di-iso-propylether, Tetrahydrofuran. Die Oxakohlenwasserstoffe können eingesetzt werden als Einzelindividuen oder in Form von Gemischen aus zwei oder mehr Einzelindividuen.

Das ebenfalls einzusetzende Magnesiumalkylat hat wiederum der oben gegebenen Definition zu entsprechen; es kann insoweit ein einschlägig übliches sein. Besonders geeignet sind die Alkylate, die abgeleitet sind vom Ethyl-, n-Propyl-sowie i-Propylalkohol; aber auch die vom Methyl-, n-Butyl-, i-Butyl oder tert.-Butylalkohol abgeleiteten Alkylate eignen sich gut für den erfindungsgemäßen Zweck. Auch die Alkylate können als Einzelindividuen oder in Form von Gemischen aus zwei oder mehr Einzelindividuen eingesetzt werden.

Der als Hilfsmedium dienende inerte flüssige Kohlenwasserstoff kann ein Kohlenwasserstoff der Art sein, die üblicherweise mit Titankomponenten für Katalysatorsysteme des Ziegler-Typs ohne Schaden für das Katalysatorsystem bzw. dessen Titan enthaltender Komponente zusammengebracht wird; - z. B. bei der Polymerisation von Ethylen. Als Beispiele für geeignete Kohlenwasserstoffe seien genannt: Pentane, Hexane, Heptane, Benzine und Cyclohexan.

(2)

Als Aluminium enthaltende Komponente des erfindungsgemäß einzusetzenden Ziegler-Katalysatorsystems kommen die einschlägig üblichen, der oben gegebenen Formel gehorchenden in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

Die Herstellung der für die vorliegende Erfindung kennzeichnenden zweiten Titan enthaltenden Unterkomponente (1.2) des Katalysatorsystems aus ihren Ausgangsstoffen bzw. Zwischenprodukten ist einfach und für den Fachmann ohne nähere Erläuterungen möglich; er wird selbstverständlich beachten, daß sich dabei - wie beim Umgang mit Titan IV- und Titan III-Katalysatorkomponenten üblich - ein strenger Ausschluß von Sauerstoff und Feuchtigkeit empfiehlt.

**Beispiel 1**

Herstellung der zweiten Titan enthaltenden Unterkomponente (1.2) der binären Titan enthaltenden Komponente (1) für das Ziegler-Katalysatorsystem.

(1.2.1) In einer ersten Stufe werden zunächst unter heftiger Bewegung durch Rühren ein Gemisch aus (1.2.1.1) 100 Gewichtsteilen Titantetrachlorid und (1.2.1.2) 12,5 Gewichtsteilen Tetrahydrofuran mit (1.2.1.3) Magnesiumethylat in einer solchen Menge (20 Gewichtsteile) zusammengebracht, daß das Molverhältnis Oxakohlenwasserstoff (1.2.1.2): Magnesiumalkylat (1.2.1.3) 1 : 1 beträgt, worauf das Ganze 0,5 Stunden auf einer Temperatur von 90° C und dann 0,5 Stunden auf einer Temperatur von 130° C gehalten wird.

(1.2.2) In einer zweiten Stufe wird daraufhin der aus (1.2.1) resultierende feinteilige Feststoff durch Absaugen von der verbleibenden Flüssigkeit abgetrennt, mit der 6-fachen Menge seines Gewichts Titantetrachlorid gespült, hierauf mit n-Heptan solange gewaschen, bis die Waschflüssigkeit frei von Titantetrachlorid bleibt, und getrocknet.

(1.2.3) In einer dritten Stufe werden dann unter heftiger Bewegung durch Rühren (1.2.3.1) 100 Gewichtsteile Titantetrachlorid mit (1.2.3.2) 16 Gewichtsteilen des aus (1.2.2) resultierenden feinteiligen Feststoffs zusammengebracht und das Zusammengebrachte 0,5 Stunden auf einer Temperatur von 130° C gehalten.

(1.2.4) In einer vierten Stufe wird hierauf der aus (1.2.3) resultierende feinteilige Feststoff durch Absaugen von der verbleibenden Flüssigkeit abgetrennt, mit der 8-fachen Menge seines Gewichts Titantetrachlorid gespült, dann mit n-Hexan solange gewaschen, bis die Waschflüssigkeit frei von Titantetrachlorid bleibt, und schließlich - unter Erhalten der gewunschten zweiten Titan

enthaltenden Unterkomponente (1.2) - getrocknet.

Die so erhaltene Unterkomponente (1.2) enthält 8,7 Gew.-% Titan.

Polymerisation unter Verwendung der im vorstehenden beschriebenen zweiten Titan enthaltenden Unterkomponente (1.2).

In einem 1-Liter-Autoklaven werden 400 ml n-Heptan vorgelegt, in denen 0,045 mmol Titan-n-butylat als erste Titan enthaltende Unterkomponente (1.1) sowie 2,4 mmol Tri-i-butylaluminium als Aluminium enthaltende Komponente (2) gelöst sind. Nach dem Aufpressen eines Ethylen-Wasserstoff-Gemisches, das 43 Mol Wasserstoff pro 100 Mol Ethylen (in der Gasphase über der Heptanlösung) enthält, und dem Einbringen von 0,015 mmol (gerechnet als Titan) der zweiten Titan enthaltenden Unterkomponente (1.2) wird bei einer Temperatur von 80°C unter einem Druck von 10 bar 2 Stunden lang polymerisiert und dabei die Konzentration an monomerem Ethylen sowie an Wasserstoff im Reaktionsgemisch während der gesamten Polymerisation konstant gehalten.

Bei dieser Arbeitsweise - bei welcher das Atomverhältnis Titan aus (1), d.h. (1.1) + (1.2) : Aluminium aus (2) etwa 1 : 40 und das Verhältnis Titan aus (1.1) : Titan aus (1.2) etwa 1 : 0,3 beträgt - wird nach Entfernen des Heptans mit Wasserdampf das Polymerisat mit einer Produktivität von 13.700 g pro g der zweiten Titan enthaltenden Unterkomponente (1.2) erhalten; es hat eine Dichte (nach DIN 53 479) von 0,930 g/cm$^3$ und einen [η]-Wert (nach DIN 53 728) von 1,64 dl/g.

**Beispiel 2**

Es wird gearbeitet wie in Beispiel 1, mit den einzigen zwei Ausnahmen, daß bei der Polymerisation (i) nicht 0,045 mmol sondern 0,075 mmol der ersten und (ii) nicht 0,015 mmol, sondern 0,011 mmol der zweiten Titan enthaltenden Unterkomponente eingesetzt werden.

Bei dieser Arbeitsweise - bei welcher das Atomverhältnis Titan aus (1), d.h. (1.1) + (1.2), : Aluminium aus (2) etwa 1 : 30 und das Verhältnis Titan aus (1.1) : Titan aus (1.2) etwa 1 : 0,15 beträgt - wird nach Entfernen des Heptans mit Wasserdampf das Polymerisat mit einer Produktivität von 18.650 g pro g der zweiten Titan enthaltenden Unterkomponente (1.2) erhalten; es hat eine Dichte (nach DIN 53 479) von 0,912 g/cm$^3$ und einen [η]-Wert (nach DIN 53 728) von 1,27 dl/g.

**Beispiel 3**

Es wird gearbeitet wie in Beispiel 1, mit den einzigen drei Ausnahmen, daß bei der Polymerisation (i) 0,1 mmol Titan-i-propylat als erste Titan enthaltende Unterkomponente (1.1), (ii) nicht 0,015 mmol sondern 0,009 mmol der zweiten Titan enthaltenden Unterkomponente (2.1), sowie (iii) Triethylaluminium als Aluminium enthaltende Komponente (2) eingesetzt werden.

Bei dieser Arbeitsweise - bei welcher das Atomverhältnis Titan aus (1), d.h. (1.1) + (1.2) : Aluminium aus (2) etwa 1 : 23 und das Verhältnis Titan aus (1.1) : Titan aus (1.2) etwa 1 : 0,09 beträgt - wird nach Entfernen des Heptans mit Wasserdampf das Polymerisat mit einer Produktivität von 15.250 g pro g der zweiten Titan enthaltenden Unterkomponente (1.2) erhalten; es hat eine Dichte (nach DIN 53 479) von 0,946 g/cm$^3$ und einen [η]-Wert (nach DIN 53 728) von 2,01 dl/g.

**Patentanspruch**

Verfahren zum Herstellen von Ethylenpolymerisaten relativ niederer Dichte durch Polymerisation von Ethylen bei Temperaturen von 20 bis 160°C und Drücken von 1 bis 100 bar in Gegenwart von Wasserstoff mittels eines Ziegler-Katalysatorsystems aus

(1) einer binären Titan enthaltenden Komponente aus

(1.1) einer ersten Titan enthaltenden Unterkomponente, bestehend aus einem Titansäureester der Formel

$$Ti(OR^1)_4,$$

worin $R^1$ steht für einen $C_1$- bis $C_{12}$-Kohlenwasserstoffrest aliphatischer und/oder aromatischer Natur, sowie

(1.2) einer zweiten Titan enthaltenden Unterkomponente, die zudem Chlor enthält,

und

(2) einer Aluminium enthaltenden Komponente, bestehend aus einer aluminiumorganischen Verbindung der Formel

$AlR^2_3$

worin stehen
$R^2$ für $R^3$ oder $OR^3$ und
$R^3$ für eine $C_1$- bis $C_8$-Alkylgruppe,

mit den Maßgaben, daß das Atomverhältnis Titan aus (1) : Aluminium aus (2) 1 : 1 bis 1 : 250 und das Verhältnis Titan aus (1.1) : Titan aus (1.2) 1 : 0,01 bis 1 : 10 beträgt,
dadurch gekennzeichnet,
daß eine binäre Titan enthaltende Komponente (1) eingesetzt wird, deren zweite Titan enthaltende Unterkomponente (1.2) besteht aus einem feinteiligen Feststoff, der erhalten worden ist, indem man zunächst

(1.2.1) unter heftiger Bewegung ein Gemisch aus (1.2.1.1) 100 Gewichtsteilen Titantetrachlorid und (1.2.1.2) 4 bis 20 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3 aber weniger als 19 Kohlenstoffatome aufweist, mit (1.2.1.3) einem Magnesium-$C_1$- bis $C_4$-alkylat in einer solchen Menge zusammenbringt, daß das Molverhältnis Oxakohlenwasserstoff (1.2.1.2) : Magnesiumalkylat (1.2.1.3) 1 : 0,3 bis 1 : 10 beträgt, das Ganze 0,1 bis 3 Stunden auf einer Temperatur von 30 bis 150° C hält, daraufhin

(1.2.2) den aus (1.2.1) resultierenden feinteiligen Feststoff von der verbleibenden Flüssigkeit abtrennt, mit der 1- bis 20-fachen Menge seines Gewichts Titantetrachlorid spült, hierauf mit einem inerten flüssigen Kohlenwasserstoff solange wäscht, bis die Waschflüssigkeit frei von Titantetrachlorid bleibt, und trocknet, dann

(1.2.3) unter heftiger Bewegung (1.2.3.1) 100 Gewichtsteile Titantetrachlorid mit (1.2.3.2) 5 bis 35 Gewichtsteilen des aus (1.2.2) resultierenden feinteiligen Feststoffs zusammenbringt und das Zusammengebrachte 0,1 bis 3 Stunden auf einer Temperatur von 30 bis 150° C hält, hierauf

(1.2.4) den aus (1.2.3) resultierenden feinteiligen Feststoff von der verbleibenden Flüssigkeit abtrennt, mit der 1- bis 20-fachen Menge seines Gewichts Titantetrachlorid spült, dann mit einem inerten flüssigen Kohlenwasserstoff solange wäscht, bis die Waschflüssigkeit frei von Titantetrachlorid bleibt, und schließlich - unter Erhalten der gewünschten zweiten Titan enthaltenden Unterkomponente (1.2)-trocknet.

**Claim**

A process for the preparation of an ethylene polymer having a relatively low density by polymerization of ethylene at from 20 to 160° C and under from 1 to 100 bar in the presence of hydrogen by means of a Ziegler catalyst system consisting of

(1) a binary titanium-containing component comprising

(1.1) a first titanium-containing subcomponent consisting of a titanate of the formula

$Ti(OR^1)_4$,

where $R^1$ is an aliphatic and/or aromatic $C_1$-$C_{12}$-hydrocarbon radical, and

(1.2) a second titanium-containing subcomponent which furthermore contains chlorine,

and

(2) an aluminum-containing component consisting of an organoaluminum compound of the formula

$AlR3^2_3$

where
$R^2$ is $R^3$ or $OR^3$ and
$R^3$ is $C_1$-$C_8$-alkyl,

with the provisos that the atomic ratio of titanium from (1) to aluminum from (2) is from 1 : 1 to 1 : 250 and the ratio of titanium from (1.1) to titanium from (1.2) is from 1 : 0.01 to 1 : 10, wherein a binary titanium-containing component (1) is used whose second titanium-containing subcomponent (1.2) consists of a finely divided solid which has been obtained by first

(1.2.1) combining a mixture of (1.2.1.1) 100 parts by weight of titanium tetrachloride and (1.2.1.2) from 4 to 20 parts by weight of a saturated aliphatic or partially saturated aliphatic and partially aromatic oxahydrocarbon having 1 or 2 oxaoxygen atoms and more than 3 but less than 19 carbon atoms, with vigorous agitation, with (1.2.1.3) a magnesium $C_1$-$C_4$-alkylate in an amount such that the molar ratio of oxahydrocarbon (1.2.1.2) to magnesium alkylate (1.2.1.3) is from 1 : 0.3 to 1 : 10, keeping the entire mixture at from 30 to 150°C for from 0.1 to 3 hours, then

(1.2.2) separating off the finely divided solid resulting from (1.2.1) from the remaining liquid, washing the said solid with from 1 to 20 times its weight of titanium tetrachloride, then washing the said solid with an inert liquid hydrocarbon until the wash liquid is free of titanium tetrachloride, and drying the said solid, then

(1.2.3) combining (1.2.3.1) 100 parts by weight of titanium tetrachloride, with vigorous agitation, with (1.2.3.2) from 5 to 35 parts by weight of the finely divided solid resulting from (1.2.2) and keeping the combined substances at from 30 to 150°C for from 0.1 to 3 hours, then

(1.2.4) separating off the finely divided solid resulting from (1.2.3) from the remaining liquid, washing the said solid with from 1 to 20 times its weight of titanium tetrachloride, then washing the said solid with an inert liquid hydrocarbon until the wash liquid is free of titanium tetrachloride, and finally carrying out drying to obtain the desired second titanium-containing subcomponent (1.2).

**Revendication**

Procédé de préparation de polymères de l'éthylene de densité relativement faible, par la polymérisation de l'éthylène à des températures qui varient de 20 à 160°C et sous des pressions de 1 à 100 bars, en présence d'hydrogène, à l'aide d'un système de catalyseur de Ziegler, formé de:

(1) un composant contenant du titane, binaire, constitué

(1.1) d'un premier sous-composant contenant du titane, se composant d'un ester de l'acide titanique de la formule

$Ti(OR^1)_4$,

dans laquelle $R^1$ représente un reste d'hydrocarbure en $C_1$ à $C_{12}$, de nature aliphatique et/ou aromatique, comme aussi

(1.2) d'un second sous-composant contenant du titane, qui contient en outre du chlore, et

(2) un composant contenant de l'aluminium, se composant d'un composé organique de l'aluminium, de la formule

$AlR^2_3$

dans laquelle
$R^2$ représente $R^3$ ou $OR^3$ et
$R^3$ représente un radical alkyle en $C_1$ à $C_8$,

avec les conditions que le rapport atomique du titane (1) à l'aluminium de (2) varie de 1 : 1 à 1 : 250 et le rapport du titane de (1.1) au titane de (1.2) varie de 1 : 0,01 à 1 : 10, caractérisé en ce que l'on met en oeuvre un composant contenant du titane, binaire (1) dont le second sous-composant contenant du titane (1.2) se compose d'un corps solide finement divisé, que l'on obtient, pour autant qu'en premier lieu,

(1.2.1) on réunisse, sous vigoureuse agitation, un mélange constitué de (1.2.1.1) 100 parties en poids de

tétrachlorure de titane et (1.2.1.2) 4 à 20 parties en poids d'un oxahydrocarbure de nature aliphatique saturée ou aliphatique partiellement saturée, partiellement aromatique, qui comporte 1 à 2 atomes d'oxygène oxa, comme aussi plus de 3, mais cependant moins de 19, atomes de carbone, avec (1.2.1.3) un alkylate ($C_1$-$C_4$) de magnésium, en une proportion telle que le rapport molaire de l'oxahydrocarbure (1.2.1.2) à l'alkylate de magnésium (1.2.1.3) varie de 1 : 0,3 à 1 : 10, on maintienne le tout à une température de 30 à 150° C pendant 0,1 à 3 heures, puis

(1.2.2) on sépare le corps solide finement divisé résultant de l'opération (1.2.1) du liquide résiduel, on le rince avec de 1 à 20 fois la quantité correspondant à son poids de tétrachlorure de titane, puis on le lave dans un hydrocarbure liquide inerte jusqu'à ce que le liquide de lavage demeure exempt de tétrachlorure de titane, et on le sèche, ensuite

(1.2.3) on réunisse, sous vigoureuse agitation, (1.2.3.1), 100 parties en poids de tétrachlorure de titane avec (1.2.3.2) 5 à 35 parties en poids du corps solide finement divisé résultant de l'opération (1.2.2) et on maintienne le mélange ainsi obtenu à une température de 30 à 150° C pendant 0,1 à 3 heures, et, finalement,

(1.2.4) on sépare le corps solide finement divisé résultant de l'opération (1.2.3) du liquide résiduel, on le rince avec de 1 à 20 fois la quantité correspondant à son poids de tétrachlorure de titane, puis on le lave avec un hydrocarbure liquide inerte jusqu'à ce que le liquide de lavage demeure exempt de tétrachlorure de titane et, enfin, on le sèche - avec obtention du second sous-composant contenant du titane (1.2) souhaité.